# EUROPÄISCHE PATENTANMELDUNG

(11) **EP 1 895 061 A2**
(43) Veröffentlichungstag der Anmeldung: **05.03.2008**
(21) Anmeldenummer: 07008789.5
(22) Anmeldetag: 30.04.2007
(51) Int. Cl.: E03B 3/03

(54) **Regenwasser-Sammelbehälter**

(30) Priorität: 29.08.2006 DE 202006013238 U
(71) Anmelder: Graf Plastics GmbH, 79331 Teningen (DE)
(72) Erfinder: Graf, Otto, P., 79331 Teningen (DE)
(74) Vertreter: Grünecker, Kinkeldey, Stockmair & Schwanhäusser Anwaltssozietät

(57) **Zusammenfassung**

Einem Regenwasser-Sammelbehälter (B), insbesondere einem Regenwassertank aus Kunststoff, der im Freien oberirdisch und direkt oder auf einen Sockel (27) aufstellbar ist, wird an zumindest einer Sichtseite (5) funktionell und eng benachbart wenigstens ein Rankgitter (R) zugeordnet, das am und/oder vor und/oder oberhalb des Sammelbehälters (B) befestigt ist und zumindest einen Hauptteil der Sichtseite (5) abdeckt.

## Beschreibung

Die Erfindung betrifft einen Regenwasser-Sammelbehälter gemäß Oberbegriff des Patentanspruchs 1.

Solche Regenwasser-Sammelbehälter, meist aus Kunststoff, auch Regenwassertanks genannt, finden bei der systematischen Regenwassernutzung zunehmende Verbreitung. Der Prospekt "GARANTIA", 2006, der Firma Otto Graf GmbH Kunststofferzeugnisse, D-79331 Teningen, zeigt und beschreibt verschiedene Varianten solcher Regenwassertanks. Ein Regenwasser-Sammelbehälter kann einzeln oder mit anderen gruppenweise oberirdisch aufgestellt werden, und zwar im Garten, im Hof, an Hofeinfahrten, auf Terrassen, oder an anderen Plätzen in oder bei einem Gebäude, und zwar meistens in enger Nachbarschaft zu einem Regenfallrohr, um beispielsweise mittels eines Regenwasser-Diebs befüllt zu werden. Regenwassemutzungsanlagen werden in vielen Regionen Deutschlands von der öffentlichen Hand gefördert. Das Regenwasser kann für die Garten- und Pflanzenwässerung, zum Wäschewaschen, für die Toilettenspülung, und auch zum Autowaschen erheblich Trinkwasser ersetzen, gegebenenfalls bis zu 50 % des täglichen Wasserbedarfs, so dass sich wertvolles Trinkwasser und teure Abwassergebühren einsparen lassen. Wenn ein Regenwasser-Sammelbehälter verborgen platziert ist, fallen sein technischer Zweck und sein gegebenenfalls beträchtliches Volumen nicht dominant ins Auge. In den meisten Einsatzfällen wird ein Regenwasser-Sammelbehälter jedoch strategisch günstig und relativ exponiert im Garten, in der Hofeinfahrt, oder eben dort aufgestellt, wo ein Regenfallrohr zur Verfügung steht oder hingeführt werden kann, und die Beschaffung des Regenwassers aus dem Sammelbehälter keine langen Umwege erfordert. Nun hat ein solcher Regenwasser-Sammelbehälter (z.B. EP 870 877 B1) wegen seiner technischen Funktion und herstellungsbedingt nicht immer ein dekoratives oder ansprechendes Erscheinungsbild, speziell an seiner Betrachtern zugewandten Seite, so dass der Anblick seiner Sichtseite in einer schönen, dekorativen oder gepflegten Umgebung als störend empfunden wird. Ferner wird aufgrund der möglicherweise zwangsweise exponierten Aufstellung des Regenwasser-Sammelbehälters dieser häufig die längste Zeit des Tages dem Sonnenlicht voll ausgesetzt, so dass das gesammelte Regenwasser nicht nur sehr warm wird und gegebenenfalls in der Qualität leidet (Algenbildung), sondern gegebenenfalls so warm ist, dass es tagsüber nicht unmittelbar zum Wässern von Pflanzen oder dgl. günstig ist. Selbst bekannte Regenwasser-Sammelbehälter in einer mit Absicht dekorativer gestalteten Ausbildung, z.B. nach Art antiker Säulen oder Halbsäulen zeigen dennoch ihren technischen Charakter.

In vielen Gärten, auf Terrassen, und in Höfen, werden Rankgitter oder Spaliere verwendet, um hochaufwachsende, rankende und ausladende Pflanzen abzustützen. Auch Rankbögen, beispielsweise für Rosen, sind üblich. Diese Rankenträger bieten Pflanzen nicht nur eine Abstützung, sondern auch eine Durchlüftung, und schützen Gebäudewände und Mauern vor dem direkten Kontakt der Pflanzen. Rankenträger oder Rankgitter werden entweder im Untergrund, an Gebäudewänden, Mauern, Bäumen, oder dgl. verankert, dort wo die Pflanzen wachsen sollen, bzw. ehe Pflanztröge oder Terrakottagefäße mit Pflanzen an das zuvor positionierte Rankgitter gestellt werden. Eine funktionelle Verknüpfung von Rankgittern mit der Regenwassernutzung gibt es bislang nicht.

Der Erfindung liegt die Aufgabe zugrunde, einen Regenwasser-Sammelbehälter, insbesondere einen Regenwassertank aus Kunststoff, anzugeben, dessen technischer Charakter auf ästhetische Weise kaschiert ist, und der eine verbesserte Wasserqualität ermöglicht.

Die gestellte Aufgabe wird mit dem Merkmal des Patentanspruchs 1 gelöst.

Durch das Rankgitter und daran wachsende Pflanzen, z. B. Efeu oder Rosen oder dgl., d.h. Pflanzen, die gegebenenfalls viel Sonnenlicht vertragen, wird der Regenwasser-Sammelbehälter oder zumindest seine Sichtseite dem direkten Sonnenlicht entzogen und entsteht durch die Blätter, die Abschattung und den Luftpolster zwischen der Pflanzebene und der Sichtseite ein nachhaltiger Kühl- und Isoliereffekt, so dass die Temperatur des gesammelten Regenwassers und dessen Neigung zur Algenbildung deutlich verringert sind. Indem dem Sammelbehälter an zumindest einer Sichtseite funktionell und benachbart wenigstens ein Rankgitter zugeordnet ist, tritt ferner der technische Charakter des Sammelbehälters und insbesondere dessen Sichtseite dank des Rankgitters dann in den Hintergrund, wenn das Rankgitter, seinem Zweck entsprechend, zumindest teilweise mit Pflanzen bewachsen ist. Das Material und Aussehen des Sammelbehälters sind frei wählbar. Selbst in einem kleinen Garten, einem dekorativ gestalteten Hof neben einer Türe, in einer Hofeinfahrt, oder auf einer Terrasse, wird somit die das ästhetische Empfinden von Betrachtern gegebenenfalls störende Wirkung des zumindest einen Regenwasser-Sammelbehälters sehr stark bis zur Gänze kaschiert. Dabei ist es natürlich zweckmäßig, das Rankgitter am, oder zumindest auch, am Sammelbehälter zu befestigen, obwohl das Rankgitter natürlich auch im Untergrund oder einer dem Sammelbehälter benachbarten Gebäudewand, einer Mauer, einem Baum, oder dgl. so befestigt sein könnte, dass es eine funktionell dem Sammelbehälter zugeordnete Komponente des Regenwassemutzungs-Systems wird, die erstmals nicht nur Pflanzen dient, sondern mit dem Sammelbehälter eine ästhetische und funktionelle Symbiose eingeht. Das Regenwasser ist schließlich auf kürzestem Weg zum Gießen der Pflanzen am Rankgitter nutzbar.

Im Kern besteht die Erfindung darin, ein Rankgitter oder jede Art eines Rankenträgers, an welchem Pflanzen hochwachsen und sich festhalten, funktionell mit einem Regenwasser-Sammelbehälter so zu kombinieren, dass der mit Pflanzen bewachsene Rankenträger eine Abschirmung des Sammelbehälters darstellt, um das gesammelte Regenwasser kühler und algenfreier zu halten, und dabei zumindest eine Sichtseite des Sammelbehälters weitgehend zu kaschieren, um selbst einen dominanten Sammelbehälter in einer Umgebung, in der er eine störende Erscheinung ist, optisch in den Hintergrund treten zu lassen oder fast vollständig zu verbergen.

Der Sammelbehälter kann eine Säule, Halbsäule, Monoblockform, ein Multiblock, eine Tonne, ein Kegelstumpf, ein Doppelkegelstumpf, ein Kasten, oder dgl. sein, d.h. er kann jede beliebige Gestalt haben. Dank der Kaschierung durch das Rankgitter kann es sich um einen sehr einfachen und kostengünstigen ggfs. großen Sammelbehälter handeln, der ohne das Rankgitter und die daran wachsenden Pflanzen gegebenenfalls sogar als hässlich, weil rein funktionell und technisch, empfunden werden könnte, vor allem wenn die Sichtseite mit aussteifenden Strukturierungen versehen ist, die herstellungstechnische oder statische Gründe haben.

Besonders zweckmäßig ist das Rankgitter ausschließlich am Sammelbehälter befestigt. Somit bildet der Sammelbehälter mit dem Rankgitter eine Einheit, deren Komponenten bereits herstellerseitig in idealer Weise aufeinander abstimmbar sind. Diese Lösung ist auch sehr kostengünstig.

Alternativ oder additiv kann das Rankgitter am Untergrund und/oder einem dem Sammelbehälter benachbarten Gebäudeteil befestigt sein. Dies kann zweckmäßig dann der Fall sein, wenn das Rankgitter beispielsweise wesentlich größer oder ausladender ist als der Sammelbehälter oder dessen Sichtseite.

Das Rankgitter kann im Üblichen kleiner oder größer sein als die Sichtseite oder dieser weitestgehend entsprechen. Denn der technische Eindruck, den ein Sammelbehälter vermitteln kann, wird bereits weitestgehend kaschiert, wenn nur ein Teilbereich der Sichtseite durch das mit Pflanzen bewachsene Rankgitter dem direkten Anblick entzogen ist.

Günstig ist es, wenn das Rankgitter und die Sichtseite weitgehend eben und zueinander parallel sind. Damit halten die Pflanzen am Randgitter einen optimalen Abstand von der Sichtseite ein, um den Kühleffekt zu optimieren.

Bei einer zweckmäßigen Ausführungsform erstreckt sich das Rankgitter um zumindest eine Ecke des Ecken aufweisenden Sammelbehälters herum. Bei dieser Ausführungsform ist der Sammelbehälter der direkten Ansicht aus einem breiten Bereich unterschiedlicher Blickwinkel entzogen. Außerdem ist ein um eine Ecke gezogenes Rankgitter formstabil.

Bei einer weiteren zweckmäßigen Ausführungsform hat der Sammelbehälter zumindest zum Teil eine runde Form, und folgt das Rankgitter zumindest einem Teil der runden Form. Wenn dieses Rankgitter direkt am Sammelbehälter befestigt ist, erhält die Einheit aus den beiden Komponenten ein sehr homogenes und gefälliges Erscheinungsbild, und dient der mit dem Rankgitter ausgestattete Sammelbehälter sozusagen als Pflanzturm, der einen besonders aparten Eindruck vermittelt, wenn er voll bewachsen ist.

Günstig ist es, wenn das Rankgitter den Sammelbehälter, ggfs. ausgenommen eine enge Unterbrechung, vollständig umfasst. Diese Lösung ist zweckmäßig, wenn der Sammelbehälter aus mehreren Blickrichtungen zu sehen ist.

Das Rankgitter kann auf herkömmliche Weise ausgebildet sein, z. B. aus Holz und/oder Metall und/oder Kunststoff und/oder aus Schnurmaterial. Dabei können horizontale und vertikale Stäbe oder schräg einander überkreuzende Stäbe vorgesehen sein. Bei Verwendung von Schnurmaterial kann das Rankgitter, zumindest bereichsweise, als Netz ausgebildet sein. Diese Lösung ist besonders leicht und für manche Pflanzenarten zu bevorzugen.

Dabei kann das Rankgitter eine vorzugsweise regelmäßige Gitterstruktur oder Netzstruktur aufweisen, obwohl durchaus auch Ornamente in dem Rankgitter vorgesehen sein können, um mit oder ohne Pflanzenbewuchs eine zusätzliche Attraktivität zu bewirken.

Für den Fall, dass das Rankgitter ausschließlich oder additiv am Sammelbehälter befestigt ist, wird zweckmäßigerweise zumindest an der Sichtseite eine Mehrzahl von Befestigungseinrichtungen des Sammelbehälters vorgesehen, um das Rankgitter stabil, und der Form der Sichtseite folgend, festlegen zu können.

Zweckmäßig ist die Verankerung zwischen dem Sammelbehälter und dem Rankgitter lösbar, beispielsweise um im Herbst Pflanzenreste besser entfernen und/oder um das Rankgitter bzw. den Sammelbehälter leichter reinigen zu können. Auch beim Umsetzen des Sammelbehälters an einen anderen Ort kann es zweckmäßig sein, das Rankgitter vorübergehend abzunehmen. Außerdem ist ein unansehnlich gewordenes Rankgitter, z.B. aus Holz, leicht austauschbar.

Günstig wird im Rankgitter ein größerer Ausschnitt definiert, z.B. bei einem Ablasshahn, um einen Gießbehälter bequemer handhaben zu können.

Bei einer zweckmäßigen Ausführungsform ist das Rankgitter nach Art eines Paravents ausgebildet, dessen Felder relativ zueinander verschwenkbar oder festgestellt sind, und der sich dreidimensional um den Sammelbehälter erstreckt. Sind die Felder relativ zueinander verschwenkbar, dann lässt sich das Rankgitter optisch so platzieren, wie es den gefälligsten Eindruck erzeugt, oder zu verschiedenen Jahreszeiten in Ausrichtung auf unterschiedliche Sonneneinstrahlungsverhältnisse, selbst wenn ein Teil des Rankgitters am Sammelbehälter verankert ist.

Bei einer anderen Ausführungsform ist das Rankgitter nach Art eines Rankbogens ausgebildet, z.B. für Rosen, der sich über den Sammelbehälter hinweg erstreckt und, vorzugsweise, zumindest stellenweise am Sammelbehälter verankert oder von diesem getragen ist. Auf diese Weise wird bei bewachsenem Rankbogen und hochstehender Sonne auch die Oberseite des Sammelbehälters abgeschirmt und verborgen.

Da einfache Sammelbehälter, wie Regenwassertonnen, eine nicht vertikale Sichtseite haben können, ist es zweckmäßig, das Rankgitter dann weitestgehend vertikal am Sammelbehälter anzubringen, weil die vertikale Position des Rankgitters für die Pflanzen unter Umständen günstig ist.

Es ist bekannt, Regenwasser-Sammelbehälter dunkel, rasengrün oder dunkelgrün einzufärben, um eine Algenbildung zu minimieren. Zweckmäßig ist das Rankgitter zumindest im Wesentlichen gleich gefärbt wie die Sichtseite. Durch die im Wesentlichen gleichen Einfärbungen wird der Eindruck einer strukturellen Einheit aus dem Sammelbehälter und dem Rankgitter noch verstärkt.

Im Fall eines auf einen Unterbau gestellten Sammelbehälters sollte das Rankgitter auch den Unterbau abdecken. Schließlich könnte das Rankgitter auch vor einer Sammelbehältergruppe angeordnet sein.

Anhand der Zeichnungen werden Ausführungsformen des Erfindungsgegenstandes erläutert. Es zeigen:
- Fig. 1: eine Perspektivansicht eines Regenwasser-Sammelbehälters mit funktionell zugeordnetem Rankgitter,
- Fig. 2 -13: Perspektivansichten weiterer Ausführungsformen.

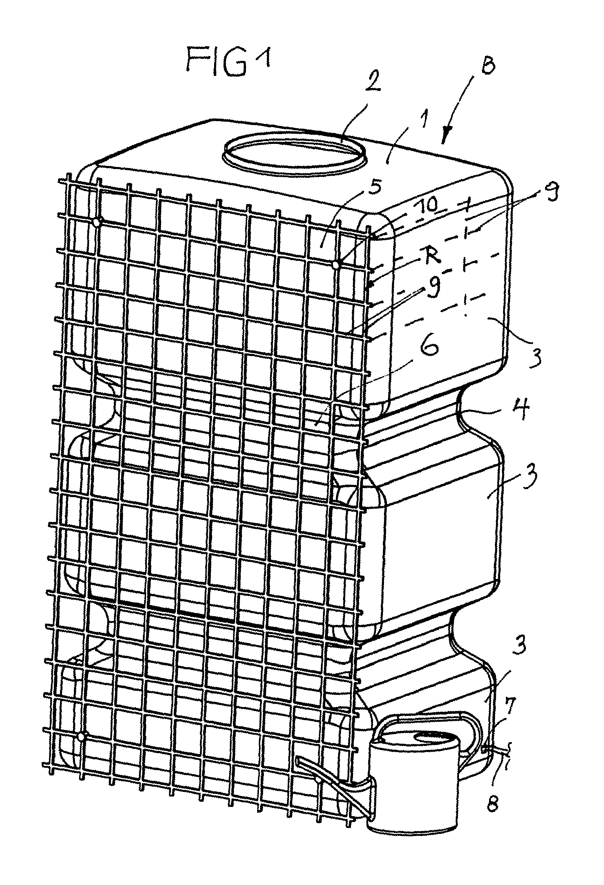

Ein in Fig. 1 gezeigter Regenwasser-Sammelbehälter B aus Kunststoff, beispielsweise ein sogenannter Regenwassertank, hat eine Multiblockform aus aufeinandergesetzten Blöcken 3 mit dazwischenliegenden eingezogenen Strukturierungen 4, eine Oberseite 1 mit einer Reinigungsöffnung 2, die durch einen nicht gezeigten Deckel verschlossen werden kann, und eine Sichtseite 5, die im Grundzug eben und vertikal ist, aber die durch die eingezogenen Bereiche 4 gebildeten, querverlaufenden Strukturierungen 6 enthält. Der Sammelbehälter B besteht könnte auch aus Metall oder anderen Werkstoffen bestehen, und auch nur einen Block 3 umfassen. Die Sichtseite 5 mit ihren Strukturierungen 6 wird durch ein in dieser Ausführungsform ebenes Rankgitter R abgedeckt, das vertikale und horizontale Gitterstäbe 9 besitzt, und aus Kunststoff und/oder Metall und/oder Holz bestehen kann. Alternativ könnten die Stäbe 9 auch schräg verlaufen oder Ornamente bilden. Das Rankgitter R ist bei dieser Ausführungsform so groß, dass es die Sichtseite 5 weitgehend abdeckt, könnte jedoch auch größer oder kleiner als diese sein. Das Rankgitter R berührt den Untergrund nicht notwendigerweise, obwohl es auch im Untergrund verankert sein könnte; verläuft im Abstand und annähernd parallel zur Sichtseite 5, und bietet hochwachsenden Pflanzen oder Blumen eine Abstütz- oder Rankmöglichkeit. Der Sammelbehälter B ist beispielsweise dunkelgrün oder pflanzgrün eingefärbt. Das Rankgitter R kann die gleiche Farbe haben, oder kann beispielsweise auch dekorativ heller gefärbt sein. Am Sammelbehälter B kann, wie üblich, ein Auslass 7 tiefliegend angeordnet sein, von dem ein beispielsweise transparenter Schlauch 8 wegführt, der gegebenenfalls nach oben wieder in die Öffnung 2 eingeführt wird und eine Füllstandsanzeige einerseits und eine Entleermöglichkeit andererseits ist.

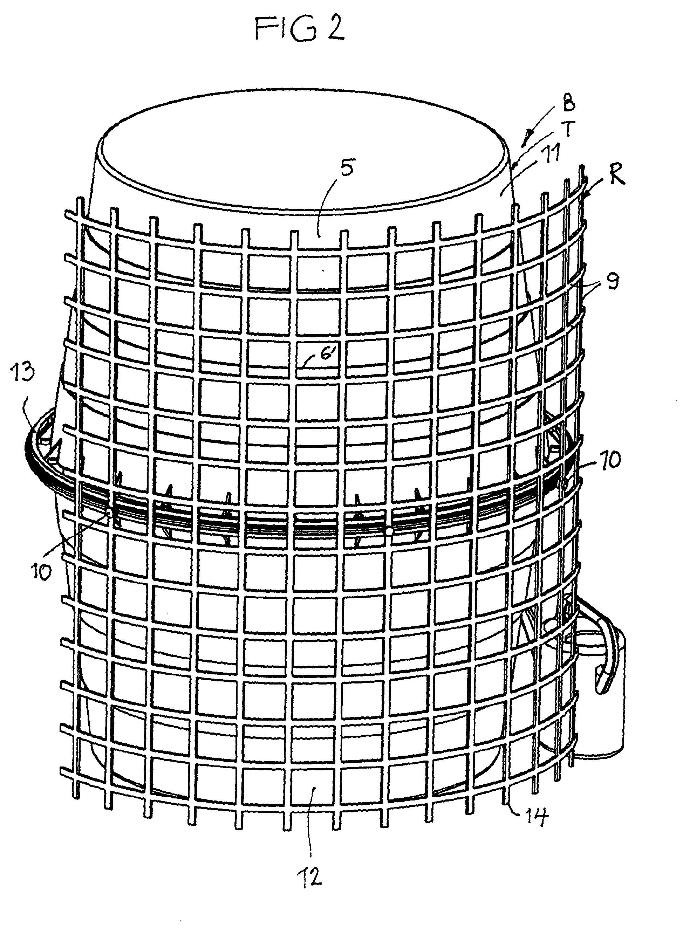

In Fig. 2 ist der Regenwasser-Sammelbehälter B beispielsweise aus zwei identischen, napfförmigen und kegelstumpfartigen Behälterteilen 11 und 12 in einem mittleren Nahtbereich 13 gefügt. An seine weitgehend runde Form angepasst, erstreckt sich das Rankgitter R zumindest über die Sichtseite 5 hinweg, auch um dort eingeformte Strukturierungen 6' zu kaschieren. Das Rankgitter R erstreckt sich beispielsweise über nahezu 120° bis 180° des Umfangs und verläuft entweder in gleich bleibendem oder in allmählich zunehmendem Abstand von der Sichtseite. Das Rankgitter R weist in dieser Ausführungsform wieder horizontale und vertikale Gitterstäbe 9 auf, die ein regelmäßiges Gitter bilden. Zur Befestigung des Rankgitters R am Sammelbehälter B sind Befestigungselemente 10, beispielsweise entlang des Nahtbereiches 13 angeformt, mit denen das Rankgitter R, zweckmäßigerweise abnehmbar, verankert wird. Dieser Regenwasser-Sammelbehälter B ist beispielsweise ein Doppelkegelstumpf-Regenwassertank T aus Kunststoff, wie PP oder PE. Alternativ könnte er nur einen Kegelstumpf-Behälterteil 10 oder 11 umfassen.

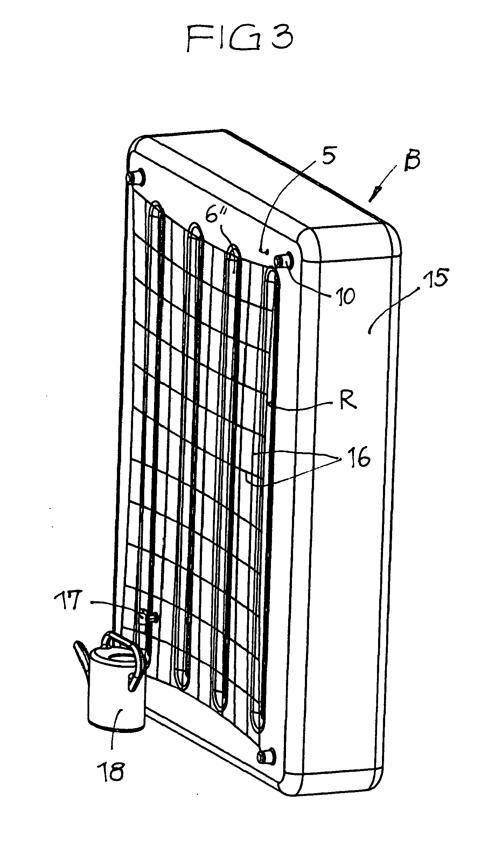

Der Regenwasser-Sammelbehälter B in Fig. 3 ist ein echteckiger Monoblock 15 mit abgerundeten Ecken und einer Tiefe, die erheblich geringer ist als die Breite der Sichtseite 5, in der aussteifende vertikale Strukturierungen 6" geformt sind. Das Rankgitter R, das zumindest einen Hauptteil der Sichtseite 5 abdeckt, ist als Netz ausgebildet und enthält schnurartige vertikale und horizontale Seile oder Drähte 16, die hier eine weitgehend regelmäßige Gitternetzstruktur bilden. In einem unteren Bereich des Monoblocks 15 ist ein Ablasshahn 17 so platziert, dass eine Standardgießkanne 18 zum Ablassen von gesammelten Regenwasser untergestellt werden kann.

Bei den hier beschriebenen Regenwasser-Sammelbehältern empfiehlt sich eine Aufstellung bei oder in der Nähe eines Regenfallrohrs, um beispielsweise über einen Regenwasser-Dieb Regenwasser in den Sammelbehälter überzuleiten.

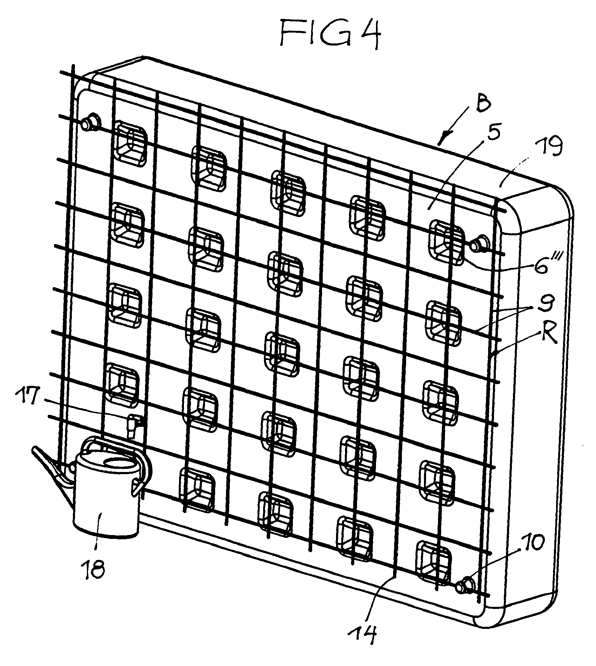

In Fig. 4 ist der Regenwasser-Sammelbehälter B ein quadratischer, hochstehender Block 19 mit geringerer Tiefe als der Seitenlänge. In der Sichtseite 5 sind einzelne Vertiefungen als Strukturierungen 6'" zur Stabilisierung eingeformt. Ferner sind an der Sichtseite 5 mehrere Befestigungselemente 10 zum Festlegen des Rankgitters R vorgesehen, das in dieser Ausführungsform eine regelmäßige Gitterstruktur beispielsweise aus Kunststoff- oder Drahtstäben (mit Ummantelung) aufweist. Das Rankgitter R steht beispielsweise oben über den Rand der Sichtseite 5 vor, und bleibt mit seinen unteren Enden 14 oberhalb des Untergrunds. Das Rankgitter erstreckt sich weitgehend vertikal und parallel zur Sichtseite 5.

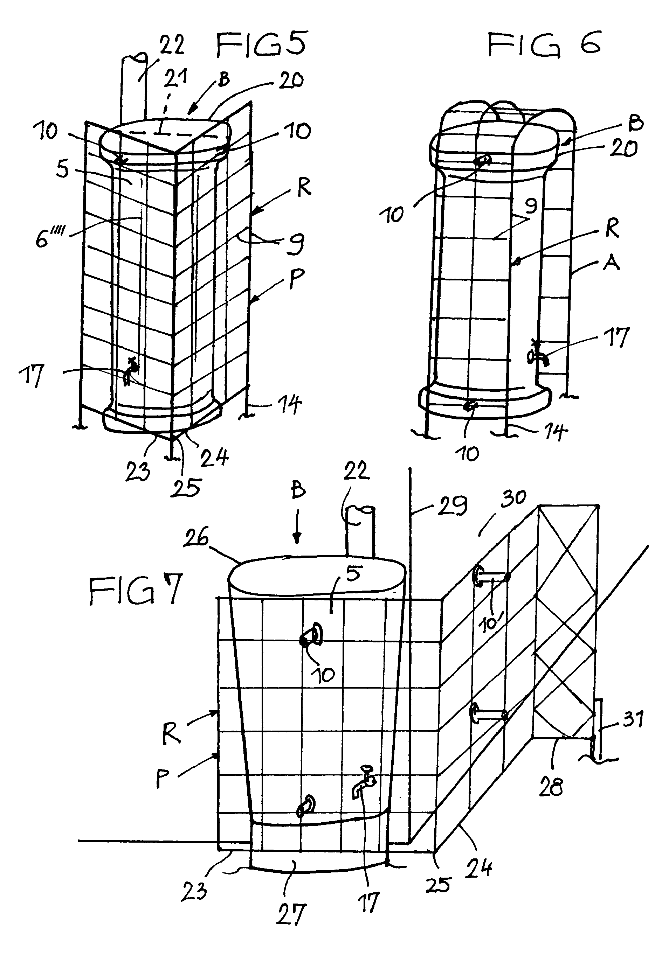

In Fig. 5 ist der Regenwasser-Sammelbehälter B nach Art einer antiken Säule 20 (oder Halbsäule 21, gestrichelt angedeutet) ausgebildet und neben einem Regenfallrohr 22 auf den Untergrund gestellt. In der Sichtseite 5 sind vertikale Strukturierungen 6"" eingeformt. Das Rankgitter R erstreckt sich über einen Winkel von beispielsweise 90° mit zwei Feldern 23, 24, um den Sammelbehälter B abzudecken. Gegebenenfalls ist das Rankgitter R, das die vertikalen und horizontalen Stäbe 9 aufweist, nach Art eines Paravents ausgebildet, so dass die beiden Felder 23, 24 um die Achse 25 zueinander verstellbar sind, und sich einerseits der Sammelbehälter B in optimaler Weise abdecken lässt, und andererseits Pflanzen optimale Licht- und Wachsverhältnisse zugestanden werden können. Das Rankgitter R ist mit Befestigungselementen 10 am Sammelbehälter B festgelegt, und, gegebenenfalls zusätzlich oder nur, mit unteren Enden 14 im Untergrund verankert.

In Fig. 6 ist der Regenwasser-Sammelbehälter B eine Art einer antiken Säule 20, wobei das Rankgitter R als Rankbogen A über den Sammelbehälter B gestülpt und beispielsweise mit den unteren Enden 14 im Untergrund verankert ist. Zusätzlich sind hier Befestigungselemente 10 am Sammelbehälter B für das Rankgitter R vorgesehen, obwohl das Rankgitter R auch nur am Sammelbehälter B festgelegt sein könnte.

In Fig. 7 ist der Regenwasser-Sammelbehälter B eine einfache Regenwassertonne 26, die bei einem Regenwasserfallrohr 22 platziert und gegebenenfalls an dieses angeschlossen ist. Das Rankgitter R ist nach Art eines Paravents aus hier drei Feldern 23, 24 und 28 gebildet, die sich gegebenenfalls relativ zueinander im Winkel einstellen lassen. Die Sichtseite 5 der Regenwassertonne 26 wird durch das Feld 23 des Paravents P abgedeckt, und auch ein gegebenenfalls vorgesehener Unterbau 27, auf dem die Regenwassertonne 26 erhöht aufgestellt sein kann, damit unter den Ablasshahn 17 bequem eine Gießkanne gesetzt werden kann. Das Feld 23 ist beispielsweise oberhalb des Untergrunds mit Befestigungselementen 10 an der Sichtseite 5 festgelegt. Die Regenwassertonne 26 steht beispielsweise bei dem Fallrohr 22 an einer Hausecke 29, wobei das Feld 24, das die rechts liegende Seite der Regenwassertonne abdeckt, mit Befestigungselementen 10' an der Hausmauer oder einer Mauer 30 festgelegt sein kann. Das dritte Feld 28 ist beispielsweise mittels eines Pflocks 31 im Untergrund verankert.

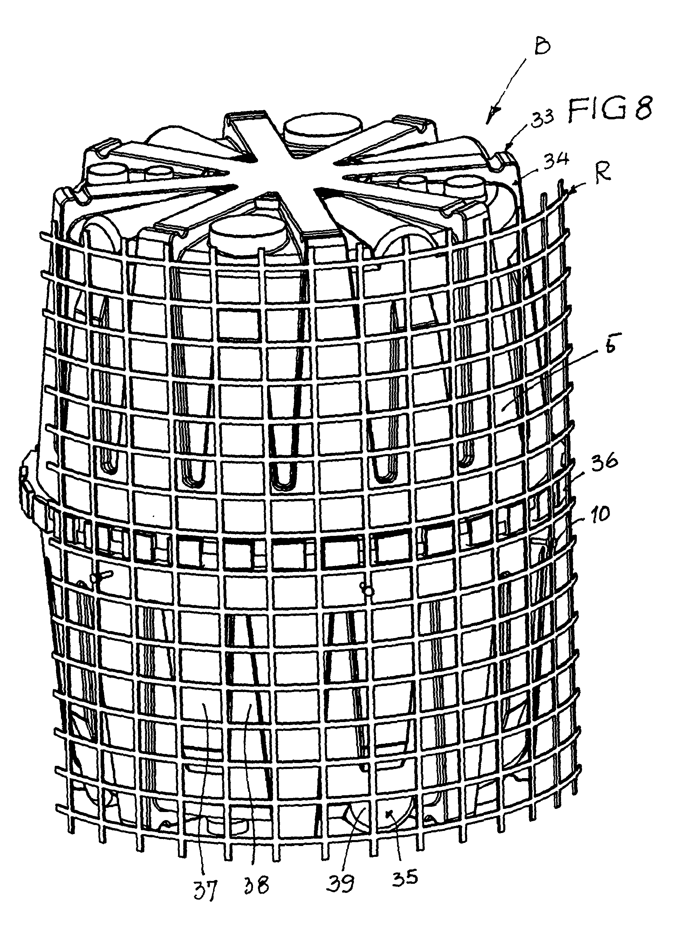

In der Ausführungsform in Fig. 8 ist der Sammelbehält4er B ein Doppelkegelstumpf 33 aus den beiden identischen napfförmigen Behälterteilen 34, 35, die entlang einer Naht mit Hilfe von aufgesteckten Klammem gefügt sind. Der Sammelbehälter B hat, aus formentechnischen und statischen Gründen relativ dominierende Strukturierungen 37, 38, 39 in den Behälterteilen 34, 35, die zumindest an der Sichtseite 5 durch das der Rundung folgende Rankgitter abgedeckt sind. Das Rankgitter R ist mittels Befestigungseinrichtungen 10 am Sammelbehälter B verankert.

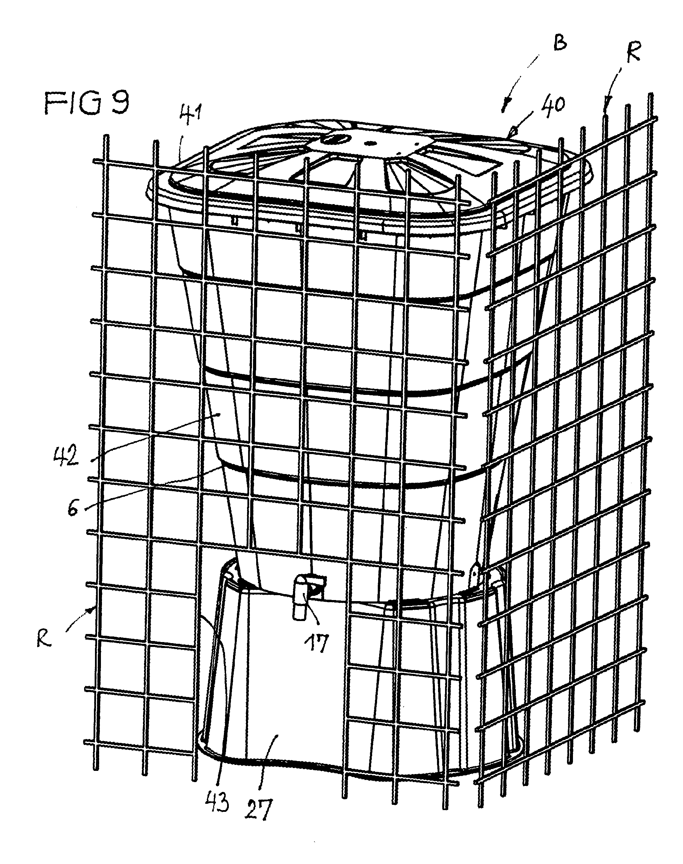

In Fig. 9 ist der Sammelbehälter B eine viereckige, sich nach unten konisch verjüngende Regenwassertonne 40 mit einem Deckel 41 und einem Unterteil 42, der gestalterhöhende Strukturierungen 6 besitzt und auf einen Unterbau 27 so aufgestellt ist, dass ein Gießbehälter unter einen tief positionierten Ablasshahn 17 gestellt werden kann. Zumindest vor zweien der Sichtseiten des Sammelbehälter ist jeweils ein Rankgitter R platziert, das im Wesentlichen vertikal steht und am Sammelbehälter B verankert sein kann, gegebenenfalls auch im Untergrund. Im Bereich des Ablasshahnes 17 ist ein Ausschnitt 43 in dem einen Rankgitter R ausgespart, der die Größe mehrerer Gitterfelder hat, und beispielsweise zum Untergrund hin offen ist.

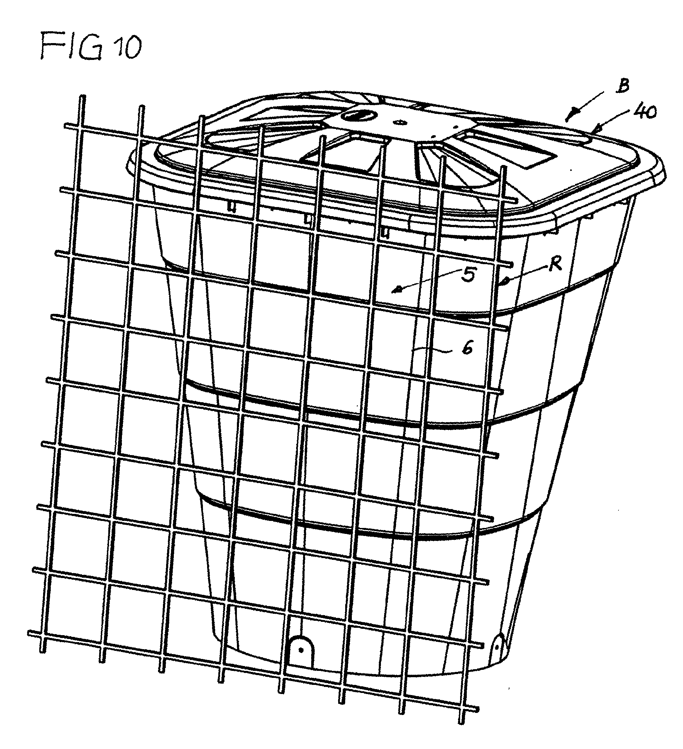

In Fig. 10 ist der Sammelbehälter B eine der von Fig. 9 ähnliche Regenwassertonne 40, die direkt auf dem Untergrund steht, und vor deren Sichtseite 5 ein Strukturierungen 6 kaschierendes Rankgitter R im Wesentlichen vertikal platziert ist. Das Rankgitter ist größer als die Sichtseite 5.

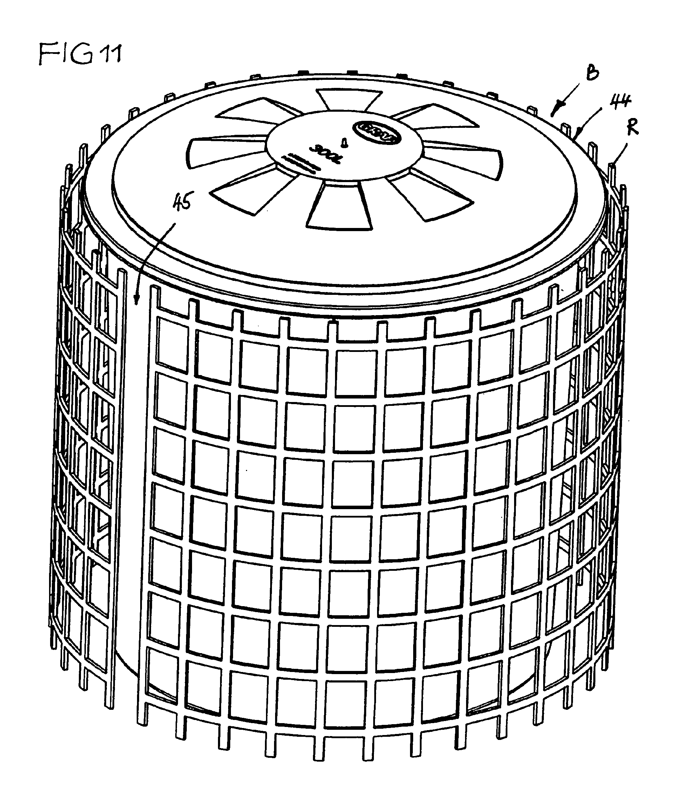

In Fig. 11 ist der Sammelbehälter B eine große, schwach konische Regenwasser-Tonne 44, die zur Gänze von einem Rankgitter R umgeben ist (oder von mehreren, gekrümmt verlaufenden Rankgittern, wobei gegebenenfalls eine freibleibende, enge Unterbrechung 45 in dem Rankgitter R vorgesehen ist. Das Rankgitter R kann auf dem Untergrund aufgestellt werden und/oder am Sammelbehälter B verankert sein.

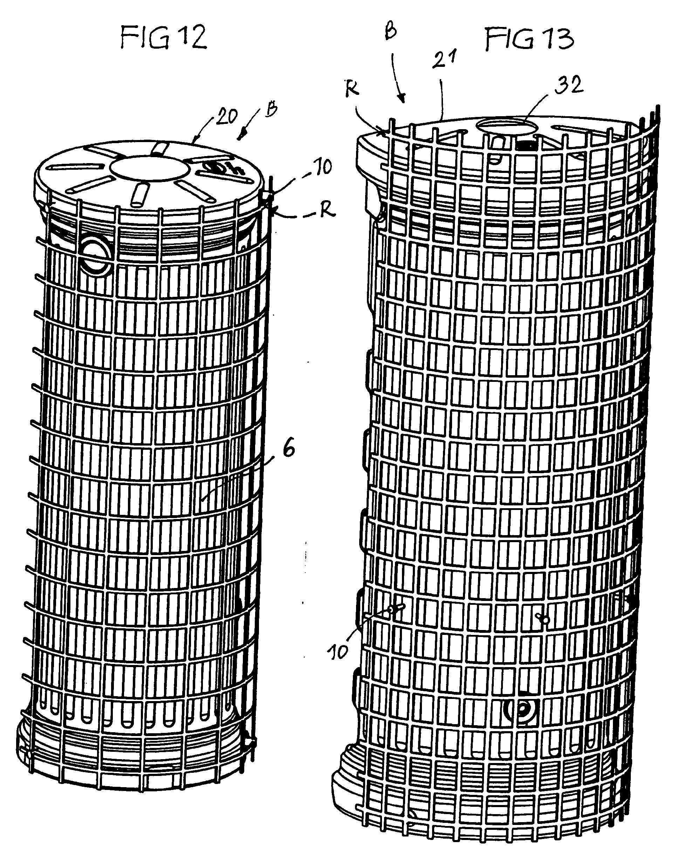

In Fig. 12 ist der Sammelbehälter B die bereits anhand Fig. 5 erläuterte Säule 20 mit vertikalen Strukturierungen 6, die durch das Rankgitter R verdeckt werden. Das Rankgitter folgt der Umfangskrümmung der Säule 20 und erstreckt sich beispielsweise über nahezu 180° und ist in Befestigungseinrichtungen 10 am Sammelbehälter B verankert.

Fig. 13 zeigt einen Sammelbehälter B, der wie die in Fig. 5 angedeutete Halbsäule 21 ausgebildet ist, d.h., von der runden Kontur der Säulenform ist an der Hinterseite ein Teil durch eine Abflachung weggefallen. Vor der runden Seite der Halbsäule 21 ist das Rankgitter R vorgesehen, das nach oben über die Oberseite des Sammelbehälters R übersteht, und auch den Blick auf eine oben liegende Öffnung 32 verwehrt.

## Patentansprüche

1. Regenwasser-Sammelbehälter (B), insbesondere Regenwassertank aus Kunststoff, der im Freien oberirdisch und direkt oder über einen Sockel (27) auf dem Untergrund aufstellbar ist, **dadurch gekennzeichnet, dass** dem Sammelbehälter (B) an zumindest einer Sichtseite (5) funktionell und eng benachbart wenigstens ein Rankgitter (R) zugeordnet ist, das am und/oder vor und/oder oberhalb des Sammelbehälters (B) befestigt ist und zumindest einen Hauptteil der Sichtseite (5) abdeckt.

2. Regenwasser-Sammelbehälter nach Anspruch 1, **dadurch gekennzeichnet, dass** der Sammelbehälter (B) eine Säule (20), eine Halbsäule (21), ein Monoblock (3), ein Multiblock , eine Tonne (40, 44), ein Kegelstumpf (11), ein Doppelkegelstumpf (T), ein Kasten (15, 19) oder dgl. ist, vorzugsweise mit wenigstens eine Sichtseite (5) aussteifenden Sichtseiten-Strukturierungen (6, 6', 6", 6"', 6""), und dass das Rankgitter (R), vorzugsweise überwiegend an oder vor diederser Sichtseite (5) angeordnet ist.

3. Regenwasser-Sammelbehälter nach Anspruch 1, **dadurch gekennzeichnet, dass** das Rankgitter (R) ausschließlich am Sammelbehälter (B) befestigt ist.

4. Regenwasser-Sammelbehälter nach Anspruch 1, **dadurch gekennzeichnet, dass** das Rankgitter (R) im Untergrund und/oder einem dem Sammelbehälter (B) benachbarten Gebäudeteil (30) befestigt ist.

5. Regenwasser-Sammelbehälter nach Anspruch 1, **dadurch gekennzeichnet, dass** das Rankgitter (R) kleiner oder größer ist als die Sichtseite (5).

6. Regenwasser-Sammelbehälter nach Anspruch 1, **dadurch gekennzeichnet, dass** das Rankgitter (R) und die Sichtseite (5) weitgehend eben und zueinander parallel sind.

7. Regenwasser-Sammelbehälter nach Anspruch 1, **dadurch gekennzeichnet, dass** sich das Rankgitter (R) um mindestens eine Ecke des Ecken aufweisenden Sammelbehälters (B, 3) herum erstreckt.

8. Regenwasser-Sammelbehälter nach Anspruch 1, **dadurch gekennzeichnet, dass** der Sammelbehälter (B, T, 20; 26) zumindest zum Teil eine runde Form hat, und dass das Rankgitter (R) zumindest einem Teil der runden Form folgend ausgebildet und angeordnet ist.

9. Regenwasser-Sammelbehälter nach Anspruch 1, **dadurch gekennzeichnet, dass** das Rankgitter (R) den Sammelbehälter (B) mit oder ohne Unterbrechungen zur Gänze umgibt.

10. Regenwasser-Sammelbehälter nach Anspruch 1, **dadurch gekennzeichnet, dass** das Rankgitter (R) aus Holz und/oder Metall und/oder Kunststoff und/oder Schnurmaterial besteht.

11. Regenwasser-Sammelbehälter nach Anspruch 10, **dadurch gekennzeichnet, dass** das Rankgitter (R) eine, vorzugsweise regelmäßige, Gitter- oder Netzstruktur aufweist.

12. Regenwasser-Sammelbehälter nach Anspruch 1 , **dadurch gekennzeichnet, dass** das Rankgitter (R) am Sammelbehälter (B) in mehreren, von zumindest einer Sichtseite (5) vorstehenden Befestigungseinrichtungen (10) verankert ist.

13. Regenwasser-Sammelbehälter nach Anspruch 12, **dadurch gekennzeichnet, dass** die Verankerung zwischen dem Sammelbehälter (B) und dem Rankgitter (R) lösbar ist.

14. Regenwasser-Sammelbehälter nach Anspruch 1, **dadurch gekennzeichnet, dass** in dem Rankgitter (R) zumindest ein mehrere Gitterfelder freilassender Ausschnitt (43) vorgesehen ist.

15. Regenwasser-Sammelbehälter nach Anspruch 1, **dadurch gekennzeichnet, dass** das Rankgitter (R) nach Art eines Paravents (P) mit mehreren, entweder relativ zueinander verschwenkbaren oder festgestellten Feldern (23, 24, 28) ausgebildet, den Sammelbehälter (B) zumindest bereichsweise umfasst und, vorzugsweise, zumindest stellenweise am Sammelbehälter (B) verankert ist.

16. Regenwasser-Sammelbehälter nach Anspruch 1, **dadurch gekennzeichnet, dass** das Rankgitter (R) nach Art eines Rankbogens (B) ausgebildet und sich über den Sammelbehälter (B, 20) hinweg erstreckt, und, vorzugsweise, stellenweise am Sammelbehälter verankert ist.

17. Regenwasser-Sammelbehälter nach Anspruch 1, **dadurch gekennzeichnet, dass** das Rankgitter (R) am Sammelbehälter (B) mit nicht vertikaler Sichtseite (5) weitestgehend vertikal angebracht ist.

18. Regenwasser-Sammelbehälter nach Anspruch 1, **dadurch gekennzeichnet, dass** das Rankgitter (R) zumindest im Wesentlichen gleich gefärbt ist wie zumindest die Sichtseite (5) des Sammelbehälters (B), vorzugsweise pflanzengrün oder dunkelgrün.

19. Regenwasser-Sammelbehälter nach Anspruch 1, **dadurch gekennzeichnet, dass** der Sammelbehälter (B; 40; 26) auf einem Unterbau (27) steht, und dass das Rankgitter (R) vor zumindest der Sichtseite des Unterbaus (27) angeordnet ist.
